# EUROPÄISCHE PATENTSCHRIFT

(11) **EP 0 803 658 B1**
(45) Veröffentlichungstag und Bekanntmachung des Hinweises auf die Patenterteilung: **23.01.2002**
(21) Anmeldenummer: 97105339.2
(22) Anmeldetag: 29.03.1997
(51) Int. Cl.: F16D 69/02, C08J 5/04, C08J 5/14

(54) **Verfahren zur Herstellung einer Reibbelagmischung für Brems-und Kupplungsbeläge**
Process for manufacturing a mixture for friction linings for brakes and clutches
Procédé de fabrication d'un mélange pour garnitures de friction pour freins et embrayages

(30) Priorität: 25.04.1996 DE 19616619; 15.06.1996 DE 19623938
(43) Veröffentlichungstag der Anmeldung: 29.10.1997
(73) Patentinhaber: TMD Friction GmbH, 51381 Leverkusen (DE)
(72) Erfinder: Hüner, Roland Dr., 86675 Baar (DE); Wappler, Dieter, 51519 Odenthal (DE)
(74) Vertreter: Dallmeyer, Georg, Dipl.-Ing.

(56) Entgegenhaltungen:
- EP-A- 0 050 377
- DE-A- 2 828 918
- DE-A- 4 205 645
- DATABASE WPI Section Ch, Week 9212 Derwent Publications Ltd., London, GB; Class A23, AN 92-093972 XP002038534 & JP 04 039 376 A (SUMITOMO ELECTRIC IND CO) , 10.Februar 1992
- DATABASE WPI Section Ch, Week 8019 Derwent Publications Ltd., London, GB; Class A18, AN 80-33767C XP002038535 & JP 55 044 101 A (TEIJIN LTD) , 28.März 1980

## Beschreibung

Die Erfindung betrifft ein Verfahren zur Herstellung einer Reibbelagmischung für Brems- und Kupplungsbeläge nach dem Oberbegriff des Anspruchs 1.

Derartige Reibbelagrezepturen haben beispielsweise folgenden Aufbau:
- Metalle (als Fasern oder Pulver)
- Füllstoffe (evt. anorganische Fasern)
- Gleitmittel (Festschmierstoffe) und
- organische Bestandteile (Harze, Kautschucke, organische Fasern, organische Füllstoffe).

Je nach Anforderungsprofil sind diese vier Rohstoffblöcke unterschiedlich in ihrer Mengenverteilung proportioniert. Feinabstimmungen der Reibbelagrezepturen werden dann über unterschiedliche Anteile der einzelnen Rohstoffblöcke erzielt.

Bei der Herstellung der Reibbelagmischung entstehen durch die pulver-, korn- und faserförmigen Bestandteile Staub, der zu unerwünschten Materialverlusten sowie zur Staubanreicherung am Arbeitsplatz führt.

Das Absaugen der Stäube durch eine Absauganlage führt zu einem nicht konstanten Feinstaubverlust, der bis zu 2 % betragen kann, wodurch auch die Reproduzierbarkeit der Reibmaterialmischung größeren Schwankungen unterliegt.

Ein bekanntes Verfahren zur Staubvermeidung besteht darin, Lösungsmittel, z.B. Isopropanol in die Reibmaterialmischung einzugeben, wobei das Lösungsmittel mit Unterdruck wieder entzogen wird. Der Nachteil dieser Staubvermeidungsmethode besteht in der Giftigkeit des Isopropanols und in der Notwendigkeit explosionsgeschützter Anlagen.

Ein weiteres bekanntes Verfahren zur Staubvermeidung besteht darin, Heißdampf während des Mischvorganges einzublasen. Dieses Verfahren macht es erforderlich, die Reibmaterialmischung anschließend zu trocknen. Bei der Reibmaterialherstellung ist daher ein weiterer Verfahrensschritt notwendig, nämlich ein aufwendiger Trocknungsprozeß. Der Erfindung liegt die Aufgabe zugrunde, ein Herstellverfahren für eine Reibmaterialmischung anzugeben, mit dem die Staubverluste bei der Herstellung der Reibmaterialmischung reduziert werden können und mit dem die Reproduzierbarkeit der Reibmaterialmischung erhöht werden kann.

Zur Lösung dieser Aufgabe dienen die Merkmale des Anspruchs 1.

Die Erfindung sieht in vorteilhafter Weise vor, daß während des Mischvorganges ein verflüssigter Weichmacher für Kunststoffe in den Mischbehälter eingesprüht wird. Der verflüssigte Weichmacher kann bei der Herstellung der Reibmaterialmischung die Staubbildung in erheblichem Umfang reduzieren und den Materialverlust von Feinstäuben soweit reduzieren, daß eine erheblich verbesserte Reproduzierbarkeit der Reibmaterialmischung erzielbar ist. Gleichzeitig wird durch die erheblich verringerte Staubemission die Luftqualität am Arbeitsplatz verbessert und die Verschmutzung der Umgebung verringert. Der verflüssigte Weichmacher bindet beim Einsprühen den aufsteigenden Staub und bringt diesen in einem hohen Anteil in die Mischung ein. Der verflüssigte Weichmacher wirkt darüber hinaus in der Reibmaterialmischung als Schmiermittel, was sich beim Verpressen der Reibmaterialmischung an den Wandungen der Preßform vorteilhaft auswirkt. Zusätzlich wirkt der verflüssigte Weichmacher als Fließhilfe. In der Summe ergibt sich dadurch ein verringerter Kraftverlust an den Wandungen und damit eine Energieersparnis. Aufgrund der verringerten Kräfte sind kürzere Preßzeiten möglich mit der Folge der Erhöhung der Preßzyklenzahl und mit der weiteren Folge einer erhöhten Werkzeugstanzzeit.

Aufgrund der verringerten Staubbelastung am Arbeitsplatz ergibt sich eine geringere gesundheitliche Mitarbeiterbelastung und eine verringerte Umweltbelastung. Die Verringerung der Materialverluste führt zu einer höheren Wirtschaftlichkeit des Herstellverfahrens und zugleich zu einer verbesserten Homogenität der Mischung aufgrund verringerter Mischungsverluste und damit im Resultat eine verbesserte Reproduzierbarkeit der Reibmaterialmischung.

Vorzugsweise ist vorgesehen, daß der verflüssigte Weichmacher über eine Düse feindispers verteilt wird. Die feindisperse Verteilung des Weichmachers in flüssigem Zustand ermöglicht die vollständige Erfassung des während des Mischvorganges aufsteigenden Staubes. Aufgrund der feindispersen Verteilung erfolgt eine Verringerung der Tröpfchengröße des verflüssigten Weichmachers und damit eine Erhöhung der Abscheiderate der Staubpartikel. Es wird vorzugsweise Triphenylphosphat als Weichmacher verwendet. Dieser verflüssigte Weichmacher ist nicht flüchtig, nicht explosiv und weist eine geringe Toxizität auf.

Der Weichmacher wird in einem Vorwärmbehälter auf eine Temperatur von ca. 80 °C bis 220 °C erhitzt. Dabei weist der Weichmacher eine Schmelzpunkt von ca. 50 °C auf und weist bei der angegebenen Temperatur eine ausreichende Viskosität auf, um feindispers verteilt zu werden.

Der Weichmacher kann mit einer Heißluftummantelung in den Mischbehälter eingespritzt werden. Die Heißluftummantelung bewirkt, daß der Weichmacher nicht schnell abkühlen kann, so daß seine Aufnahmefähigkeit für Staubpartikel bis zum Auftreffen auf die Reibmaterialmischung beibehalten bleibt.

Bei einem bevorzugten Verfahren ist vorgesehen, daß der Weichmacher mit einer Dosierung von ca. 50 bis 200 g/s, vorzugsweise ca. 140 bis 180 g/s, eingesprüht wird. Eine solch hohe Dosierung ist zweckmäßig, um eine kurze Mischungszeit zu erzielen.

Zur Erzielung kurzer Mischzeiten ist desweiteren eine Dosierzeit von ca. 120 bis 300 s, vorzugsweise ca. 150 bis 200 s, vorgesehen.

Der Anteil des Weichmachers in der Reibmaterialmischung beträgt zwischen ca. 0,1 bis 5 Gew%.

Der Weichmacher wird vorzugsweise zentral in das Mischgut eingesprüht, wodurch ein Anhaften des Weichmachers an den Mischerinnenwänden und/oder an den Mischwerkzeugen vermieden werden kann.

Die Einspritzung des Weichmachers kann auch intermittierend erfolgen.

Im folgenden werden Anwendungsbeispiele der Erfindung in den Zeichnungen näher erläutert.

Es zeigen:
- Fig. 1: einen Lödige-Mischer mit Einspritzeinrichtung zur Anwendung des erfindungsgemäßen Verfahrens, und
- Fig. 2: einen Eirich-Mischer mit Einspritzeinrichtung zur Anwendung des erfindungsgemäßen Verfahrens.

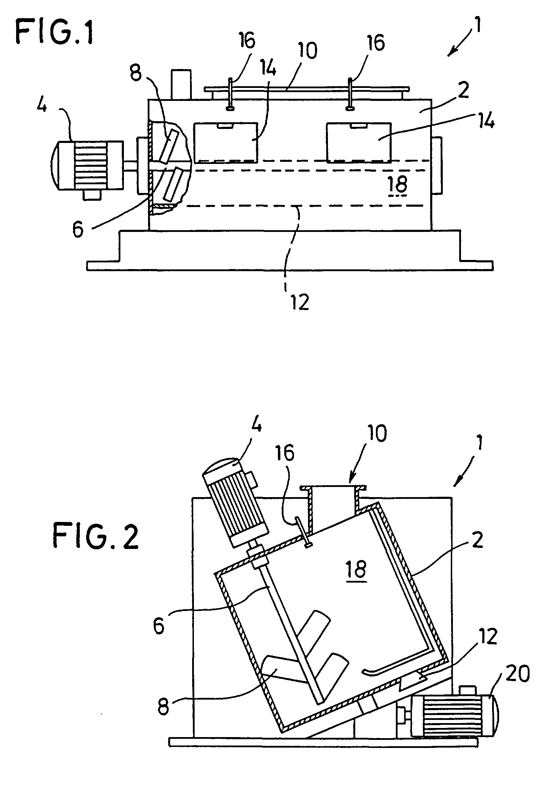

Die in Fig. 1 gezeigte Mischvorrichtung 1 ist als Lödige-Mischer bekannt und besteht im wesentlichen aus einer Mischtrommel 2, in der koaxial zur Längsachse der Mischtrommel 2 eine von einem Motor 4 angetriebene Welle 6 gelagert ist. Die Welle trägt radial gleichmäßig verteilte Mischschaufeln 8, die die in die Mischtrommel 2 eingebrachte Reibmaterialmischung kräftig durchmischt.

Die Reibmaterialmischung wird über eine Einfüllöffnung 10 in die Mischtrommel 2 eingebracht und seitlich an der Mischtrommel 2 über eine Entnahmeöffnung 12 nach dem Mischvorgang wieder entnommen. Auf einer Seite der Mischtrommel 2 können Fenster 14 angeordnet sein, die die Beobachtung des Mischvorganges erlauben. Auf der Oberseite der Mischtrommel 2 sind zwei Einspritzdüsen 16 schematisch dargestellt, über die der verflüssigte Weichmacher, vorzugsweise Triphenylphosphat bei einer Temperatur von ca. 80 bis 220 °C, z.B. 170 °C, in den Mischraum der Mischtrommel 2 eingespritzt wird, um während des Mischvorganges freiwerdenden Staub zu binden.

Fig. 2 zeigte eine Mischvorrichtung, die unter der Bezeichnung Eirich-Mischer bekannt ist. Bei dieser Mischvorrichtung wird die Reibmaterialmischung über eine Einfüllöffnung 10 in eine Mischkammer 18 eingebracht, die in einer rotierenden Mischtrommel 2 angeordnet ist. Die rotierende Mischtrommel 2 weist eine Rotationsachse auf, die gegenüber der Vertikalen geneigt ist. Die rotierende Mischtrommel 2 weist einen eigenen Antrieb 20 auf. Exzentrisch zu der Rotationachse der Mischtrommel 2 ist ein Rührwerk in der Mischtrommel 2 gelagert, mit einer parallel zur Rotationsachse der Mischtrommel 2 verlaufenden Welle 6, an der wiederum Mischschaufeln 8 befestigt sind. Das Rührwerk wird von einem Motor 4 angetrieben. Am Boden der Mischtrommel 2 ist eine Entnahmeöffnung 12 für die Reibmaterialmischung vorgesehen. Am oberen Ende der Mischtrommel ist zentrisch eine Einspritzdüse angeordnet, über die der verflüssigte Weichmacher in die Mischkammer 18 eingespritzt werden kann. Es versteht sich, daß anstelle einer einzigen Einspritzdüse 16 auch mehrere Einspritzdüsen am oberen Ende der Mischtrommel 2 vorgesehen sein können.

Das für die Staubbindung vorgesehene und bei Raumtemperatur nur in fester Form vorliegende Triphenylphosphat wird in einem in den Zeichnungen nicht dargestellten Vorwärmbehälter aufgeschmolzen. Die Schmelze wird auf eine Temperatur von ca. 80 bis 220 °C erhitzt und dann unter Aufrechterhaltung der Temperatur beispielsweise durch beheizte Zuleitungen in einen beheizbaren Düsenkopf oder in eine oder mehrere beheizte Einspritzdüsen 16 unter Druck eingeleitet. Der Weichmacher wird dann feindispers während des Mischprozesses eingesprüht, wobei mit Hilfe der Einspritzdüsen 16 eine Zerstäubung des Weichmachers in einem Korngrößenbereich zwischen 0,5 und 100 µm Tröpfchengröße erreichbar ist. Dabei wird verhindert, daß sich Triphenylphosphat an den Gehäusewänden des Mischers niederschlägt, wodurch in vorteilhafter Weise auf eine Beheizung des Mischers verzichtet werden kann. Der feindisperse Sprühstrahl aus Triphenylphosphat-Tröpfchen bindet den während des Mischvorganges aufsteigenden Staub schnell und nahezu vollständig, wodurch Materialverluste vermieden werden, ohne daß die Mischzeiten verlängert werden müssen.

Der Einspritz- und Verdüsungsvorgang kann mit Hilfe von Heißluft unterstützt werden, z.B. durch Ummantelung des Sprühstrahls mit Heißluft.

Zur Erzielung kurzer Mischzeiten ist eine Dosierzeit von ca. 120 bis 150 s vorgesehen, wobei beispielsweise ca. 140 bis 180 g/s Triphenylphosphat in die Mischung eingebracht wird. Die Dosierung erfolgt hinsichtlich Temperatur, Einspritzgeschwindigkeit und Einspritzmenge so, daß der Weichmacher erst nach der Staubbindung abkühlen kann. Mit Hilfe der vorgeschlagenen Verfahrensweise läßt sich eine Dosiergenauigkeit von unter 100 g erzielen. Hierzu kann Triphenylphosphat mit Hilfe dosiergenauer Kolben- oder Zahnradpumpen den Dosierköpfen bzw. Einspritzdüsen 16 zugeführt werden. Die hohe Dosiergenauigkeit ergibt in Verbindung mit den erheblich reduzierten Materialverlusten eine pulvrige, in hohem Maße reproduzierbare Reibmaterialmischung.

Der Einspritzdruck beträgt vorzugsweise 1 bis 3 bar, wobei der Weichmacher in einem Zeitraum von 2 bis 5 min ggf. intermittierend eingespritzt werden kann. Die zugeführte Menge an Weichmacher wird darauf abgestimmt, daß nach Abschluß des Mischungsvorgangs ca. 0,1 bis 5 Gew.% Triphenylphosphat in der Reibmaterialmischung enthalten sind.

## Patentansprüche

1. Verfahren zur Herstellung einer Reibmaterialmischung für Brems- und Kupplungsbeläge, bestehend aus
- Fasern,
- organischen und/oder anorganischen Füllstoffen,
- Schmierstoffen und/oder
- Metallen oder Metallverbindungen, sowie
- organischen Bindemitteln,
durch Mischen in einem Mischraum
**dadurch gekennzeichnet,**
**daß** während des Mischvorganges ein verflüssigter Weichmacher für Kunststoffe in den Mischraum eingesprüht wird.

2. Verfahren nach Anspruch 1, **dadurch gekennzeichnet, daß** der verflüssigte Weichmacher über eine Düse feindispers verteilt wird.

3. Verfahren nach Anspruch 1 oder 2, **dadurch gekennzeichnet, daß** als Weichmacher Triphenylphosphat verwendet wird.

4. Verfahren nach einem der Ansprüche 1 bis 3, **dadurch gekennzeichnet, daß** der Weichmacher in einem Vorwärmbehälter auf eine Temperatur von ca. 80 bis 220 °C erhitzt wird.

5. Verfahren nach einem der Ansprüche 1 bis 4, **dadurch gekennzeichnet, daß** der Weichmacher mit Heißluftummantelung in den Mischbehälter eingespritzt wird.

6. Verfahren nach einem der Ansprüche 1 bis 5, **dadurch gekennzeichnet, daß** der Weichmacher mit einer Dosierung von ca. 50 bis 200 g/s, vorzugsweise ca. 140 bis 180 g/s eingesprüht wird.

7. Verfahren nach einem der Ansprüche 1 bis 6, **dadurch gekennzeichnet, daß** zur Erzielung kurzer Mischzeiten eine Dosierzeit von ca. 120 bis 360 s, vorzugsweise ca. 150 bis 200 s, vorgesehen wird.

8. Verfahren nach einem der Ansprüche 1 bis 7, **dadurch gekennzeichnet, daß** der Weichmacher zentral in das Mischgut eingesprüht wird.

9. Verfahren nach einem der Ansprüche 1 bis 8, **dadurch gekennzeichnet, daß** der verflüssigte Weichmacher einen Gewichtsanteil an der Reibmaterialmischung von ca. 0,1 bis 5 Gew%, vorzugsweise 1 bis 3 Gew%, aufweist.

10. Verfahren nach einem der Ansprüche 1 bis 9, **dadurch gekennzeichnet, daß** der verflüssigte Weichmacher intermittierend eingesprüht wird.

## Claims

1. Method for manufacturing a friction material mixture for brake and clutch linings, comprising:
- fibres,
- organic and/or anorganic filling materials,
- lubricants and/or
- metals or metal compounds, as well as
- organic binding materials,
by mixing in a mixing chamber,
**characterized in that**
during the mixing process a liquified softening agent for plastic materials is sprayed into the mixing chamber.

2. Method according to claim 1, **characterized in that** the liquified softening agent is finely dispersed via a nozzle.

3. Method according to claim 1 or 2, **characterized in that** triphenyl phosphate is used as a softening agent.

4. Method according to one of claims 1 to 3, **characterized in that** the softening agent is heated up to a temperature of approximately 80 to 220 °C in a preheating container.

5. Method according to one of claims 1 to 4, **characterized in that** the softening agent is jacketed with hot air when being injected into the mixing container.

6. Method according to one of claims 1 to 5, **characterized in that** the softening agent is sprayed in a dosage of approximately 50 to 200 g/s, preferably approximately 140 to 180 g/s.

7. Method according to one of claims 1 to 6, **characterized in that**, for obtaining short mixing periods, a dosing period of approximately 120 to 360 s, preferably approximately 150 to 200 s is applied.

8. Method according to one of claims 1 to 7, **characterized in that** the softening agent is centrally sprayed into the product to be mixed.

9. Method according to one of claims 1 to 8, **characterized in that** the liquified softening agent comprises a fraction by weight of the friction material mixture of approximately 0.1 to 5 % by weight, preferably 1 to 3 % by weight.

10. Method according to one of claims 1 to 9, **characterized in that** the liquified softening agent is sprayed intermittently.

## Revendications

1. Procédé de fabrication d'un mélange, pour garnitures de friction pour freins et embrayages, se composant :
- de fibres,
- de charges organiques et / ou minérales,
- de lubrifiants et / ou
- de métaux ou de composés métalliques, ainsi que
- de liants organiques,
par mélange dans une chambre de mélange,
**caractérisé par le fait que**, pendant le processus de mélange, un plastifiant liquéfié pour matières plastiques est projeté dans la chambre de mélange.

2. Procédé selon la revendication 1, **caractérisé par le fait que** le plastifiant liquéfié est distribué en fine dispersion par une buse .

3. Procédé selon la revendication 1 ou 2, **caractérisé par le fait que** du triphénylphosphate est utilisé comme plastifiant.

4. Procédé selon l'une des revendications 1 à 3, **caractérisé par le fait que** le plastifiant est chauffé à une température d'environ 80 à 220°C dans un récipient de préchauffage.

5. Procédé selon l'une des revendications 1 à 4, **caractérisé par le fait que** le plastifiant est injecté dans le récipient de mélange avec une gaine d'air chaud.

6. Procédé selon l'une des revendications 1 à 5, **caractérisé par le fait que** le plastifiant est projeté selon un dosage d'environ 50 à 200 g /s, de préférence d'environ 140 à 180 g / s.

7. Procédé selon l'une des revendications 1 à 6, **caractérisé par le fait que** pour obtenir des temps de mélange courts, un temps de dosage d'environ 120 à 360 s, de préférence d'environ 150 à 200 s, est prévu.

8. Procédé selon l'une des revendications 1 à 7, **caractérisé par le fait que** le plastifiant est projeté au centre dans le mélange.

9. Procédé selon l'une des revendications 1 à 8, **caractérisé par le fait que** le plastifiant liquéfié présente une proportion en poids, relativement au mélange pour garnitures de friction , d'environ 0,1 à 5 %, de préférence 1 à 3 %.

10. Procédé selon l'une des revendications 1 à 9, **caractérisé par le fait que** le plastifiant liquéfié est projeté par intermittence.
